Europäisches Patentamt

European Patent Office

Office européen des brevets

(11) Numéro de publication : **0 502 781 A1**

# (12) DEMANDE DE BREVET EUROPEEN

(21) Numéro de dépôt : **92400552.3**

(22) Date de dépôt : **03.03.92**

(51) Int. Cl.⁵ : **G01D 5/26, G01L 1/24**

(30) Priorité : **07.03.91 FR 9102752**

(43) Date de publication de la demande :
**09.09.92 Bulletin 92/37**

(84) Etats contractants désignés :
**CH DE GB IT LI SE**

(71) Demandeur : **FRAMATOME**
**Tour Fiat, 1 Place de la Coupole**
**F-92084 Courbevoie (FR)**

(72) Inventeur : **Pierre, Guillaume**
**Résidence des Erables, 6 Avenue Monsieur**
**F-91800 Brunoy (FR)**
Inventeur : **Jurczyszyn Michel**
**68, rue Gabriel Péri**
**F-94200 Ivry (FR)**
Inventeur : **Tardy, André**
**19, rue d'Arpajon**
**F-91520 Egly (FR)**

(74) Mandataire : **Bouget, Lucien et al**
**Cabinet Lavoix 2, Place d'Estienne d'Orves**
**F-75441 Paris Cédex 09 (FR)**

(54) **Capteur optique, en particulier capteur de pression et procédé de mesure optique correspondant.**

(57)   Le capteur optique comporte un support (2), une fibre optique (15) et deux éléments (9, 10) montés sur le support (2) de manière à se déplacer en fonction des variations d'une grandeur à mesurer telle que la pression. On mesure l'atténuation d'un rayonnement lumineux dans la fibre optique (15) déformée par flexion alternée. Le support (2) est réalisé sous la forme d'une poutre fléchissante comportant deux parties d'extrémité (2b, 2c) en appui sur deux butées fixes et une partie centrale (2a) reliée à un moyen de flexion (16) actionné en fonction des variations de la grandeur à mesurer. La fibre optique (15) est disposée entre les deux éléments mobiles (9, 10) en forme de peigne fixés chacun sur une partie d'extrémité (2b, 2c) du support. Les éléments (9, 10) comportent des surfaces actives venant en contact avec la fibre (15) pour produire une flexion alternée variable de la fibre (15) lors de leur déplacement relatif.

FIG.1

L'invention concerne un capteur optique et en particulier un capteur de pression ou de pression différentielle.

Dans le cas où l'on doit effectuer des mesures de paramètres physiques tels que la pression d'un fluide, dans une ambiance explosive ou dans une zone où les mesures risquent de subir des perturbations d'origine électromagnétique, il peut être souhaitable d'effectuer ces mesures par voie optique, pour éviter toute utilisation de courant électrique.

Pour effectuer ces mesures, on utilise des capteurs optiques qui réalisent une modulation ou une atténuation d'un rayonnement lumineux pénétrant dans le capteur, en fonction des variations de la grandeur à mesurer.

On connaît en particulier des capteurs optiques qui comportent un support, une fibre optique et au moins un élément monté sur le support qui est susceptible de se déplacer sur le support en fonction des variations de la grandeur physique à mesurer. Les déplacements de l'élément mobile qui comporte une surface active en contact avec une génératrice de la fibre optique de forme ondulée permettent de déformer la fibre optique par flexion alternée, avec une amplitude qui est fonction de la valeur instantanée de la grandeur physique à mesurer.

On alimente la fibre optique à l'une de ses extrémités, de manière à provoquer la propagation d'un rayonnement lumineux suivant la longueur de la fibre et on mesure l'intensité du rayonnement lumineux et son atténuation à la sortie de la fibre.

Cette atténuation dépend de l'amplitude de la déformation de la fibre par flexion alternée et donc de la valeur de la grandeur physique à mesurer.

Les dispositifs mettant en oeuvre ce principe de mesure comportent généralement un support sur lequel sont fixés des éléments susceptibles de se déplacer l'un par rapport à l'autre, en fonction des variations de la grandeur physique à mesurer qui peut être par exemple une contrainte, une pression ou une température.

On connaît par exemple une jauge de contraintes de type optique comportant deux éléments qui peuvent être fixés sur la pièce dans laquelle on mesure les contraintes et qui comportent des plots entre lesquels est intercalée une fibre optique. Lorsque la pièce se déforme, le déplacement relatif des éléments réalise, par l'intermédiaire des plots, une déformation de la fibre par flexion alternée qui permet de mesurer l'amplitude des déformations et donc des contraintes dans la pièce.

On connaît également un dispositif de mesure de grandeurs physiques ou mécaniques telles que des contraintes, des températures ou des pressions, qui comporte un support sur lequel sont fixés des éléments de déformation d'une fibre optique comportant des surfaces ondulées en contact avec deux génératrices extérieures de la fibre.

Ces jauges ou capteurs connus de l'art antérieur ne présentent pas une structure compacte et résistante permettant de les utiliser de manière efficace dans une installation industrielle. En outre, les mesures effectuées sont susceptibles de s'avérer peu sensibles et peu reproductibles, en particulier dans le cas de capteurs utilisés pour des mesures de pression.

Le but de l'invention est donc de proposer un capteur optique, et en particulier un capteur de pression, du type comportant un support, une fibre optique et au moins un élément monté sur le support de manière à se déplacer en fonction des variations d'une grandeur à mesurer et à déformer la fibre optique par flexion alternée, la fibre étant alimentée par un rayonnement lumineux dont on mesure l'atténuation, ce capteur optique pouvant être réalisé sous une forme simple, compacte et robuste permettant son utilisation sur une installation industrielle et de manière à réaliser des mesures d'un paramètre physique tel que la pression, avec une grande sensibilité et une grande reproductibilité.

Dans ce but, le support est réalisé sous la forme d'une poutre fléchissante comportant deux parties d'extrémité en appui sur deux butées fixes et une partie centrale déformable par flexion, reliée à un moyen de flexion actionné en fonction des variations de la grandeur à mesurer et le capteur comporte deux éléments mobiles en forme de peigne entre lesquels est disposée la fibre optique, fixés chacun sur une partie d'extrémité du support, de manière à présenter deux parties actives venant en contact avec la fibre qui se déplacent l'une par rapport à l'autre en fonction de la flexion de la poutre, pour produire une flexion alternée variable de la fibre.

Afin de bien faire comprendre l'invention, on va maintenant décrire à titre d'exemple non limitatif en se référant aux figures jointes en annexe, un mode de réalisation d'un capteur optique suivant l'invention et son utilisation pour effectuer des mesures de pression.

La figure 1 est une vue en coupe d'un capteur de pression suivant l'invention.

La figure 2 est une vue de face suivant 2 de la figure 1 des éléments en forme de peigne du capteur représenté sur la figure 1.

La figure 3 est une vue schématique d'une chaîne de mesure permettant la mise en oeuvre d'un capteur suivant l'invention.

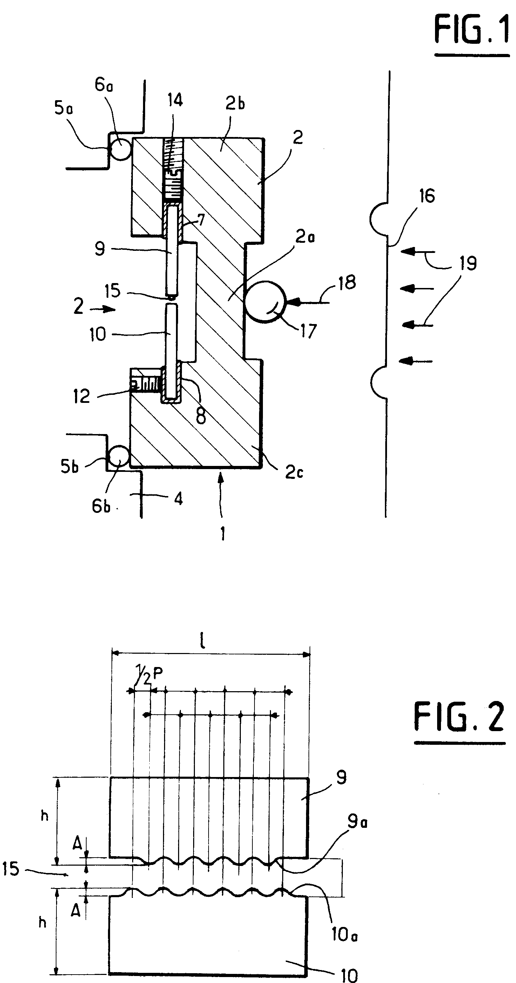

Sur la figure 1, on voit un capteur optique de pression suivant l'invention désigné de manière générale par le repère 1.

Le capteur optique 1 comporte un support 2 réalisé sous la forme d'une poutre fléchissante comportant une partie centrale 2a et deux parties d'extrémité 2b et 2c dont l'épaisseur est supérieure à l'épaisseur de la partie centrale 2a.

Le support 2 du capteur est monté à l'intérieur d'un corps de capteur 4 comportant deux logements 5a et 5b dans chacun desquels est montée une butée, respectivement 6a et 6b.

Les parties d'extrémité 2b et 2c du support 2 du capteur sont fixées en appui contre les butées, respectivement 6a et 6b.

Les parties d'extrémité 2b et 2c du support 2 présentent deux surfaces en vis-à-vis qui sont usinées pour constituer des logements de réception en forme de fentes 7 et 8 de deux éléments 9, 10 constitués par des lames métalliques planes.

La partie d'extrémité 2c du support 2 comporte une ouverture taraudée débouchant latéralement dans le logement 8, dans laquelle est engagée une vis de serrage et de fixation 12 de l'élément 10.

La partie d'extrémité 2b du support comporte, dans le prolongement de la fente 7, un trou taraudé débouchant à son extrémité dans le logement 7. Une vis 14 introduite dans l'ouverture taraudée permet de régler la position de l'élément 9 en forme de lame, en direction de l'élément 10 situé en vis-à-vis.

Comme il est visible sur la figure 2, les éléments 9 et 10 en forme de lame comportent des surfaces actives, respectivement 9a et 10a de forme sinusoïdale et disposées en vis-à-vis, avec un décalage égal à une demi-période.

Une fibre optique 15 est intercalée entre les surfaces actives 9a et 9b des éléments 9 et 10, de manière à venir en contact avec les surfaces sinusoïdales 9a et 10a suivant deux génératrices de sa surface externe.

Le réglage de la position de l'élément 9 grâce à la vis 14 permet de réaliser une mise en contact de la fibre optique avec les surfaces 9a et 10a ainsi qu'un certain serrage de la fibre optique entraînant une déformation en flexion alternée de cette fibre entre les ondes successives des surfaces 9a et 10a.

Dans le cas de la réalisation d'un capteur de pression suivant l'invention, on a utilisé deux éléments 9 et 10 en forme de peigne constitués par des lames planes ayant une largeur $\ell$ de 10 mm, une hauteur h de 5 mm et une épaisseur d'1 mm. Les peignes comportent des surfaces actives en forme de sinusoïdes dont la période P est de 1,5 mm et l'amplitude A de 0,1 mm.

La mise en contact des surfaces actives sinusoïdales de ces éléments avec une fibre optique multimode 100/140 $\mu$m permet d'obtenir des microcourbures de la fibre.

La déformation de la fibre par microcourbure est réglée de manière que l'amplitude de déformation se situe aux environs de 10 $\mu$m.

La période du profil de déformation sinusoïdale de la fibre est choisie de manière que cette période soit égale à la longueur de battement entre les modes de la fibre, ce qui induit un couplage d'énergie des modes guidés vers les modes non guidés de la fibre, et par conséquent, une atténuation optique produite par la déformation.

Le capteur de pression 1 représenté sur la figure 1 comporte une membrane métallique 16 fixée sur le corps de capteur 4, une butée 17 en appui sur la partie centrale 2a du support 2 à l'opposé des éléments 9 et 10 et de la fibre 15 et un moyen, tel qu'une tige rigide, permettant de transmettre les déplacements de la membrane déformable 16, par exemple sous l'effet d'une pression externe, à la butée 17 et à la partie centrale 2a du support 2, suivant la direction et le sens de la flèche 18, c'est-à-dire dans une direction perpendiculaire aux lames 9 et 10 et à l'axe de la fibre 15.

Dans le cas où une pression s'exerce sur la face externe de la membrane 16, comme indiqué par les flèches 19, une force est transmise à la butée 17, suivant le sens de la flèche 18, de manière à provoquer une déformation par flexion de la partie centrale 2a du support 2 en forme de poutre dont les extrémités sont en butée sur le corps du capteur.

La déformation par flexion de la partie centrale 2a du support 2 provoque un déplacement relatif des parties d'extrémité 2b et 2c et donc des éléments 9 et 10 et de leurs surfaces actives sinusoïdales 9a et 10a. Ce déplacement relatif entraîne une variation de la déformation par microcourbure de la fibre 15.

Dans le cas représenté sur la figure 1, une flexion du support 2 en forme de poutre se traduit par un écartement des surfaces 9a et 10a et donc par une diminution de la déformation de la fibre par microcourbure, à partir de son état déformé obtenu par rapprochement des éléments 9 et 10.

Le capteur optique 1 pourrait être également utilisé pour effectuer une mesure de pression différentielle, en soumettant la membrane 16 à deux pressions différentes sur sa face externe et sur sa face interne.

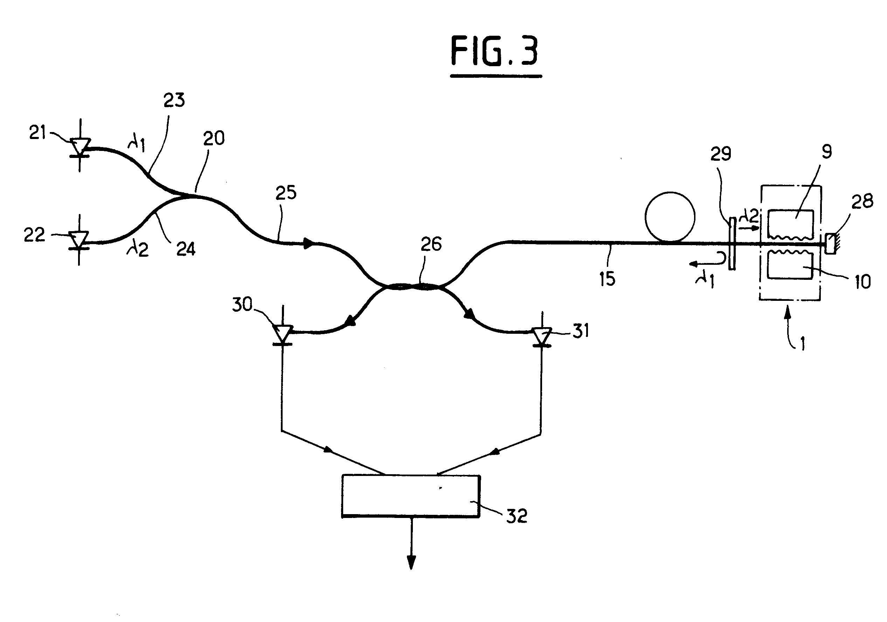

Sur la figure 3, on a représenté de manière schématique une chaîne de mesure permettant de réaliser des mesures d'atténuation d'un rayonnement lumineux dans une fibre optique telle que la fibre 15 subissant une déformation par microcourbures entre les éléments mobiles 9, 10 d'un capteur optique tel que le capteur 1.

Ces mesures d'atténuation permettent d'effectuer des mesures d'une grandeur physique telle que la pression, la déformation par microcourbure de la fibre et donc sa capacité d'atténuation dépendant de la position relative des éléments mobiles à surface active sinusoïdale qui dépend elle-même de la valeur du paramètre à mesurer.

La chaîne de mesure comporte deux diodes électroluminescentes 21 et 22 réglées pour émettre respectivement un rayonnement lumineux de longueur d'onde $\lambda$1 dans une première fibre optique 23 et un rayonnement lumineux de longueur d'onde $\lambda$2 dans une seconde fibre optique 24, les fibres optiques 23 et 24 étant reliées au niveau d'un coupleur 20. La sortie du coupleur 20 est reliée à une fibre optique 25 recevant un rayonnement constitué par la juxtaposition du rayonnement de longueur d'onde λ1 et du rayonnement de longueur d'onde λ2. La fibre 25 est reliée à un second coupleur 26.

Le capteur optique 1 qui est constitué par un capteur de pression tel que décrit et représenté sur les figures 1 et 2 comporte une fibre optique multimode 15 intercalée entre les éléments mobiles 9 et 10 du capteur 1 à l'une de ses extrémités et reliée, à son autre extrémité, au coupleur 26. L'extrémité de la partie de la fibre 15 intercalée entre les éléments mobiles 9 et 10 constitue un miroir réfléchissant 28.

Un filtre dichroïque 29 est également intercalé sur le trajet de la fibre 15, à l'entrée du capteur optique 1. Le filtre dichroïque 29 permet de laisser passer la partie du rayonnement lumineux de longueur d'onde λ2 et de renvoyer par réflexion la partie du rayonnement de longueur d'onde λ1, dans la fibre optique 15.

Le coupleur 26 comporte quatre voies qui sont reliées respectivement à la fibre optique 15, à la fibre optique 25 et à deux fibres optiques reliées respectivement à une photodiode 30 et à une photodiode 31 recevant des signaux lumineux et assurant la conversion de ces signaux lumineux en signaux électriques qui sont transmis à un calculateur 32.

Les signaux lumineux provenant des diodes électroluminescentes 21 et 22 sont transmis directement par le coupleur 26 à la photodiode 31, ces signaux étant convertis en signaux électriques et traités par le calculateur, de manière à contrôler la puissance émise par les diodes électroluminescentes.

Le signal constitué par la juxtaposition des signaux de longueurs d'onde λ1 et λ2 est transmis au capteur optique 1 par la fibre 15.

La partie du signal de longueur d'onde λ1 est réfléchie par le filtre dichroïque 29 et transmise à la photodiode 30 qui permet de convertir le signal optique en un signal électrique qui est transmis au calculateur 32. On peut ainsi déterminer et mettre en mémoire la puissance ou l'intensité du signal lumineux réfléchi avant son entrée dans le capteur optique 1 et non affecté par les microcourbures de la fibre 15.

La partie du signal de longueur d'onde λ2 pénètre dans le capteur optique, se propage dans la partie de la fibre déformée par microcourbures puis est réfléchie dans la fibre par le miroir 28. Cette partie du signal de longueur d'onde λ2 est renvoyée par le miroir 28 dans la fibre 15 et parvient à la photodiode 30, ce qui permet de déterminer et de mettre en mémoire la puissance ou l'intensité du signal atténué à l'intérieur du capteur optique 1.

On détermine l'atténuation du signal optique par le rapport de la puissance mesurée sur le signal atténué de longueur d'onde λ2 à la puissance mesurée sur le signal de longueur d'onde λ1 réfléchi par le filtre dichroïque 29.

On obtient ainsi une valeur très précise de l'atténuation qui est tout-à-fait indépendante des caractéristiques optiques de la chaîne de mesure.

Comme expliqué plus haut, cette valeur de l'atténuation est représentative d'une valeur de la grandeur physique mesurée et, dans le cas du capteur représenté sur les figures 1 et 2, de la pression exercée par un fluide sur la membrane déformable 16.

La mesure de pression peut être réalisée de manière sensible et avec une bonne reproductibilité, dans la mesure où le capteur comporte des éléments de type mécanique assurant la transmission des efforts et provoquant le déplacement relatif des éléments mobiles 9 et 10.

La section de la partie centrale 2a du support 2 en forme de poutre peut être ajustée de manière à obtenir une déformation d'une amplitude voulue sous l'effet d'une force donnée exercée par la tige d'actionnement du capteur.

En outre, le capteur peut être réalisé de manière simple, compacte et robuste, de façon à pouvoir être utilisé dans le cadre de mesures industrielles.

Le support et les éléments mobiles du capteur peuvent être facilement insérés et montés dans le corps d'un capteur de pression existant.

Il est à remarquer également que la réponse du capteur optique ne dépend pas de la longueur d'onde de la source lumineuse utilisée.

Les capteurs optiques suivant l'invention sont donc tout-à-fait adaptés à une utilisation dans une installation où un grand nombre de mesures est effectué, avec un multiplexage chromatique des signaux de mesure. Ces capteurs peuvent donc être utilisés de manière avantageuse sur un réseau multiplexé en longueurs d'onde.

L'invention ne se limite pas au mode de réalisation qui a été décrit.

Le support du capteur peut présenter une forme différente de celle qui a été décrite. Les parties d'extrémité de ce support peuvent comporter des moyens de fixation et de réglage des éléments mobiles différents de ceux qui ont été décrits.

Le capteur peut également comporter un élément différent d'une membrane sur laquelle s'exerce une pression, comme moyen d'application d'un effort de flexion sur le support en forme de poutre. Ce moyen d'actionnement peut être constitué par tout dispositif susceptible de transmettre un effort à la partie centrale du support, en fonction des valeurs d'une grandeur physique à mesurer.

Le capteur suivant l'invention peut être utilisé non seulement pour effectuer des mesures de pression mais encore pour effectuer des mesures de force, de contrainte ou de toute autre grandeur physique ou mécanique dont les variations peuvent se traduire par des variations d'un effort exercé sur le support du capteur.

## Revendications

**1.-** Capteur optique, et en particulier capteur de pression, du type comportant un support (2), une fibre optique (15) et au moins un élément (9, 10) monté sur le support de manière à se déplacer en fonction des variations d'une grandeur à mesurer et à déformer la fibre optique (15) par flexion alternée, la fibre (15) étant alimentée par un rayonnement lumineux dont on mesure l'atténuation, caractérisé par le fait que le support (2) est réalisé sous la forme d'une poutre fléchissante comportant deux parties d'extrémité (2b, 2c) en appui sur deux butées fixes (6a, 6b) et une partie centrale (2a) déformable par flexion, reliée à un organe de flexion (16) actionné en fonction des variations de la grandeur à mesurer et qu'il comporte deux éléments mobiles (9, 10) en forme de peigne, entre lesquels est disposée une fibre optique (15) fixés chacun sur une partie d'extrémité (2b, 2c) du support (2), de manière à présenter deux parties actives (9a, 10a) venant en contact avec la fibre (15) qui se déplacent l'une par rapport à l'autre, en fonction de la flexion du support (2) en forme de poutre, pour produire une flexion alternée variable de la fibre (15).

**2.-** Capteur optique suivant la revendication 1, caractérisé par le fait que l'organe de flexion (16) du support (2) en forme de poutre est constitué par une membrane assurant une poussée (18) sur une butée (17) en contact avec la partie centrale (2a) du support (2) sous l'effet d'une pression exercée sur l'une au moins des faces de la membrane (16).

**3.-** Capteur optique suivant l'une quelconque des revendications 1 et 2, caractérisé par le fait que les éléments mobiles (9, 10) en forme de peigne comportent chacun une surface active (9a, 10a) de forme sinusoïdale.

**4.-** Capteur optique suivant l'une quelconque des revendications 1, 2 et 3, caractérisé par le fait que les parties d'extrémité (2b, 2c) du support (2) en forme de poutre présentent une largeur plus importante que la partie centrale fléchissante (2a) dans la direction d'actionnement (18) du moyen de flexion (16) et comportent deux surfaces en regard sur lesquelles débouchent deux logements (7, 8) de montage des éléments mobiles (9, 10).

**5.-** Capteur optique suivant la revendication 4, caractérisé par le fait que l'un des éléments mobiles (10) est fixé dans son logement (8) par serrage d'une vis (12) de direction transversale par rapport au logement (8) et que le second élément mobile (9) est monté coulissant dans son logement (7) de manière à pouvoir être déplacé en direction de la surface active (10a) du premier élément mobile (10) par une vis de réglage (14) engagée dans un trou taraudé situé dans le prolongement du logement (7) du second élément mobile (9).

**6.-** Procédé de mesure optique d'une grandeur physique, en utilisant un capteur optique suivant l'une quelconque des revendications 1 à 5, caractérisé par le fait qu'on fait parvenir à l'une des extrémités d'une fibre optique (15) dont l'autre extrémité est intercalée entre les éléments mobiles (9, 10) du capteur optique, un rayonnement lumineux constitué par un premier rayonnement de longueur d'onde ($\lambda$1) et par un second rayonnement de longueur d'onde ($\lambda$2), qu'on renvoie par réflexion le premier rayonnement de longueur d'onde ($\lambda$1) sur une photodiode (30), avant son passage dans le capteur optique (1), qu'on mesure l'intensité du premier rayonnement de longueur d'onde ($\lambda$1), qu'on renvoie le second rayonnement de longueur d'onde ($\lambda$2) par réflexion, sur la photodiode (30), après son passage dans le capteur optique (1) comportant la partie de la fibre (15) déformée par flexion alternée, qu'on mesure l'intensité du second rayonnement de longueur d'onde ($\lambda$2), qu'on détermine l'atténuation provoquée par la fibre (15) déformée par flexion alternée, à l'intérieur du capteur optique (1), en calculant le rapport des intensités du second rayonnement et du premier rayonnement et qu'on en déduit la valeur de la grandeur à mesurer.

FIG.1

FIG.2

# FIG.3

EP 0 502 781 A1

EP 0 502 781 A1

| Office européen des brevets | RAPPORT DE RECHERCHE EUROPEENNE | Numero de la demande |
|---|---|---|

EP    92 40 0552

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 393 956 (BESTQUINT LIMITED) * colonne 3, ligne 20 - colonne 7, ligne 16; figures * | 1,2 | G01D5/26 G01L1/24 |
| A | WO-A-8 300 744 (TRW INC.) * page 10, ligne 7 - page 27, alinéa 1; figures 1-17 * | 1,2 | |
| A | US-A-4 545 253 (AVICOLA) * colonne 5, ligne 49 - colonne 18, ligne 46; figures * | 1,2 | |
| A | US-A-4 342 907 (MACEDO ET AL.) * colonne 8, ligne 42 - ligne 60; figure 10 * * exemple 8 * | 1,2 | |

DOMAINES TECHNIQUES RECHERCHES (Int. Cl.5)

G01D
G01L

Le présent rapport a été établi pour toutes les revendications

| Lieu de la recherche | Date d'achèvement de la recherche | Examinateur |
|---|---|---|
| LA HAYE | 10 JUIN 1992 | BATTESON A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant